# EUROPEAN PATENT SPECIFICATION

(11) **EP 3 371 503 B1**
(45) Date of publication and mention of the grant of the patent: **26.07.2023**
(21) Application number: 16805492.2
(22) Date of filing: 31.10.2016
(51) Int. Cl.: F16L 33/22

(54) **TUBULAR CONNECTORS**
ROHRFÖRMIGE VERBINDER
CONNECTEURS TUBULAIRES

(30) Priority: 03.11.2015 GB 201519446
(43) Date of publication of application: 12.09.2018
(73) Proprietor: Inspired Designs Limited, Douglas, Isle of Man IM1 5EP (GB)
(72) Inventor: WADMAN, Alexis, Adrian, Felipe, 1181 AT Amstelveen (NL); VAN DER MEIJDEN, Hendrikus, Johannes, Midrand 1685 (ZA)
(74) Representative: Potter Clarkson
(86) International application number: PCT/IB2016/001557
(87) International publication number: WO 2017/077375

(56) References cited:
- EP-A1- 0 692 664
- WO-A1-2015/036836
- DE-A1- 3 616 964
- GB-A- 2 289 316

## Description

### CROSS-REFERENCE(S) TO RELATED APPLICATIONS

This application claims priority from United Kingdom patent application number 1519446.7 filed on 03 November 2015.

### FIELD OF THE INVENTION

This invention relates to tubular connectors that are used for attaching an elongated tube to a termination fitting that may assume the form of an attachment to a supply of fluid under pressure or to a delivery end at which fluid is to be delivered under pressure to a fluid distribution or fluid activated unit or machine.

The invention is also particularly directed at tubular connectors that are simple to assemble onto an end of a tube that is deformable so as to be capable of circumferential expansion at least to some extent. It is envisaged that the invention will be primarily applicable to flexible tubes including garden hoses and hydraulic or pneumatic pressure hoses that are typically made of extruded plastics or other material that is usually reinforced with fibrous strands that maybe braided or simply wound around an inner layer of a multilayer construction.

### BACKGROUND TO THE INVENTION

The document GB 2 289 316 A shows a pipe coupling having two body parts. One or both comprise a tubular portion having an end onto which a pipe can be engaged and an external screw thread around a part of each tubular portion, to receive a pipe nut which by rotation can be moved onto the exterior of a pipe engaged on the end of the coupling to clamp the pipe. There is a ball and socket joint between the two body parts of the coupling and a centre nut captive around and against one of the body parts and screwed partly onto the other body part to hold the two together, so that the two body parts can swivel relative to one another. The ball of the ball and socket joint may comprise an annular flap integral with and around the ball and an annular undercut beneath the flap, which form a fluid tight seal against the socket of the other body part.

Numerous different proposals and constructions of connectors have been put forward from time to time and have been made available in the marketplace.

As regards garden hoses, one range of couplings and connectors that has become widely available and has in reality created an industry standard is one that originated with the German company GARDENA AG in which a hose coupling has a first component having a male tubular spigot encircled by an O-ring and that is introduced axially into a socket in a second component. The hose connector used in relation to such couplings has a first component that has a connector spigot with an undulating outer surface and a circular array of a multitude of gripper fingers spaced radially outwards from the spigot. The gripper fingers are urged towards the spigot in unison by a second component in the form of a union nut that has an internal screw thread cooperating with an external screw thread on the first component. The union nut has a tapered surface that urges the gripper fingers inwards to clamp the hose firmly onto the spigot. The arrangement works well but does have some disadvantages in that the screw threads have given problems and can slip. Also, the gripper fingers can become loose and tend to be directed to the inside of a hose rather than the outside during installation of the hose.

Numerous other connectors have been proposed and used. For the most part the hose connectors employ a connector spigot extending into the hose that is firmly clamped onto the outside of the connector spigot by means of one form of clamp or another that may be releasable or permanent. Permanent connectors are generally made by crimping a sleeve or wires onto the outside of the hose whilst releasable connectors typically employ a screw operated clamp that encircles the hose.

A number of prior art patents have proposed the use of a union nut having a converging screw threaded union nut that receives the outer surface of a flexible tube supported on a tubular spigot having a bulbous portion over which the flexible tube is fitted. The union nut can be screwed onto the outer surface if the flexible tube to urge the flexible tube into tight engagement with the bulbous portion. British patent no GB619,479 is considered to be the most appropriate prior patent to mention and in that instance the union nut is dimensioned such that it can be introduced over the bulbous portion ahead of the flexible tube being fitted to the spigot and being urged over the bulbous portion.

Unfortunately, such an arrangement is not appropriate to modern marketing methods and it is not advantageous to require a consumer to fit two separate items together in order to use the tubular connector.

The preceding discussion of the background to the invention is intended only to facilitate an understanding of the present invention. It should be appreciated that the discussion is not an acknowledgment or admission that any of the material referred to was part of the common general knowledge in the art as at the priority date of the application.

Applicant believes that there is room for improvement in relation to the hose connectors.

### SUMMARY OF THE INVENTION

In accordance with this invention there is provided a tube termination unit that has a nominal internal diameter and is capable of limited circumferential expansion and wherein the tube termination unit includes a connector spigot having a flow passage forming an interior to the connector spigot, at least one circumferential ridge on an outer cylindrical surface of the connector spigot with an outer diameter of the circumferential ridge being larger than the said nominal internal diameter of the tube, and a union nut located on the connector spigot wherein the union nut has an internal screw thread the diameter of which increases from an inner end of the union nut to an open outer end thereof which is directed towards the circumferential ridge, the arrangement being such that the screw thread is adapted to bite into the outer surface of the tube when the union nut is screwed onto an outer surface of the tube end that covers the circumferential ridge to clamp the tube into sealing engagement with the ridge with the thread of the union nut engaging the outer surface of the tube, wherein the union nut is held captive on the connector spigot by virtue of an external flange encircling the connector spigot at an axial distance from the circumferential ridge and wherein the outer periphery of the external flange is configured to co-operate with an inwardly directed lip on the union nut to provide for the union nut to be forced past the flange during assembly and to render it captive on the connector spigot after such assembly and wherein the external flange is configured to form a stop on an outer surface of the connector spigot to limit the extent to which the tube can be introduced onto the connector spigot.

Further features of the invention provide for the outer surface of the periphery of the external flange to be tapered in an axial direction to follow a truncated conical shape with the narrower end located nearer the circumferential ridge; for the inwardly directed lip to be tapered in diameter such that a narrowest region thereof is located nearer the external flange in the installed condition; for the external flange to be positioned a distance from the circumferential ridge such that the outer surface of a hose end abutting the flange is locatable such that the truncated conical thread on the inside of the nut will bite into the outer surface of the hose in two regions, namely the outside of the hose-end itself and a bulging hose portion that passes over the circumferential ridge; and for the outer diameter of the connector spigot to be somewhat larger between the flange and end remote from the circumferential ridge than it is between the flange and the circumferential ridge itself.

A still further feature of the invention provides for the outer surface of the connector spigot to taper gradually down from the periphery of the ridge towards the free end of the connector spigot to form a generally truncated conical surface of small cone angle to assist in the circumferential expansion of a tube during introduction thereof onto the connector spigot.

It will be understood that the materials of construction of the various components of the connector defined above will be chosen according to the physical properties of the connector and the tubes or hoses being connected using determining factors that are well known in the art. Thus, for example, in application to garden hoses or many other flexible hoses, the materials of construction will typically be injection moulded plastics material having suitable characteristics or properties.

In the instance that injection moulded plastics components are employed, any union nuts or other components that need to be rotated about their own axis or anchored against rotation, can be arranged to be engaged manually by the provision of suitable external gripping formations, as may be appropriate, or alternatively, by a suitable spanner or wrench.

In order that the various aspects of the invention may be more fully understood, one exemplary embodiment thereof will now be described with reference to the accompanying drawings.

### BRIEF DESCRIPTION OF THE DRAWINGS

In the drawings:-
- Figure 1: is a three-dimensional view from a distal location of one embodiment of quick release coupling and connector particularly suitable for use on garden or like hoses and showing a socket entry into the coupling;
- Figure 2: is an exploded three-dimensional view from a proximal location of the same embodiment showing the union nut removed from the connector spigot but showing the rear of the socket;
- Figure 3: is a sectional elevation of the coupling illustrated in Figures 1 and 2 in a relationship in which the union nut is positioned immediately prior to inter engagement with a hose;
- Figure 4: is the same as Figure 3 but showing the union nut in it is engaged operative position; and,
- Figure 5: is a sectional elevation showing the connector spigot and union nut in their relative positions prior to the union nut being introduced onto the spigot.

### DETAILED DESCRIPTION WITH REFERENCE TO THE DRAWINGS

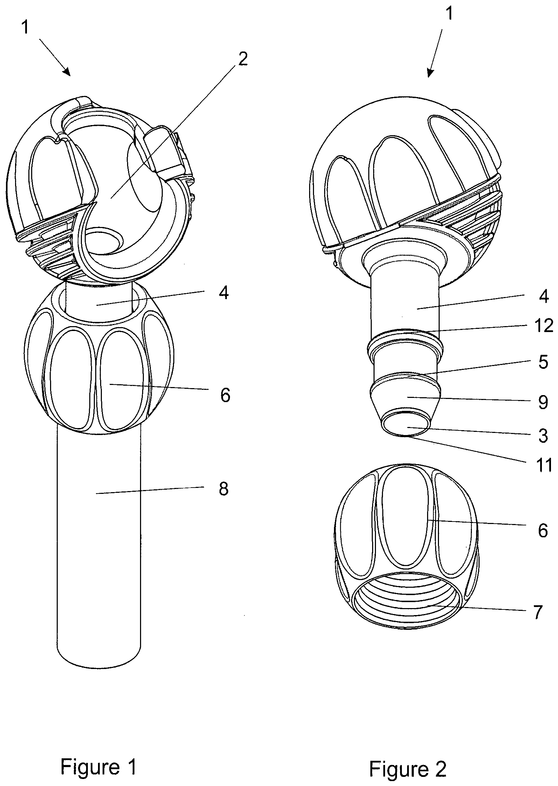

Figures 1 to 4 of the drawings illustrate an embodiment of the invention in association with a proprietary tubular coupling to which the connector of the present invention may conveniently be applied. It will be perfectly clear to those of ordinary skill in the art that the tubular coupling could assume any other form and it is only illustrated in a proprietary form for a matter of convenience and illustration. The proprietary tubular coupling is more fully described in our published international patent application number WO 2015/036836.

A coupling component (1) has a socket (2) for receiving a headed formation on a tubular male spigot (not shown) in releasable manner as is fully described in our said earlier published patent application.

The coupling component has a flow passage (3) forming the interior of a connector spigot (4) that has at least one circumferential ridge (5) on the outer surface thereof and a union nut (6) that is held captive on the connector spigot. The union nut has an internal screw thread (7) the diameter of which increases from the inner end of the union nut to the open end thereof which is directed towards the circumferential ridge. The screw thread thus follows a truncated conical path with the cone angle selected to provide a suitable locking engagement with the outer surface of a hose end (8) which will depend, at least to some extent, on the physical properties of the materials of the union nut and hose. The screw thread is preferably of a saw tooth shape in cross-section to assist in preventing the hose end engaged by fro being pulled axially out of the union nut.

The arrangement is such that the union nut, when screwed onto the hose end (8) that passes over the circumferential ridge, the hose can be clamped into sealing engagement with the ridge by rotation of the union nut with the thread of the union nut biting into an outer surface of the hose. It should be noted that tension applied to the hose will tend to move the hose off the connector spigot and any such movement will pull the union nut with it which will only tighten the connection.

In order to facilitate the introduction of a hose end onto the connector spigot, the outer surface of the spigot tapers down gradually from the maximum diameter of the circumferential ridge to form a generally truncated conical surface (9) of small cone angle that ends at the distal end (11) of the connector spigot. This is aimed at assisting in the circumferential stretching of a hose so that it passes over the circumferential ridge effectively during movement thereof onto the connector spigot.

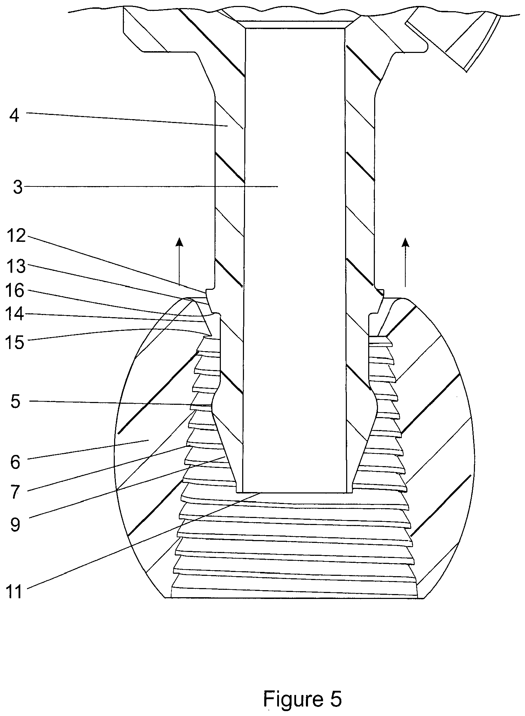

As provided by this invention, and as shown most clearly in Figure 5, the union nut and the connector spigot are particularly configured to interact to enable the union nut to be press fitted over an integral external flange (12) formed on the connector spigot between the socket and circumferential ridge with the flange serving to hold the union nut captive on the connector spigot. The external flange encircles the spigot and has an outer surface (13) of its periphery configured to co-operate with an inwardly directed lip (14) on the end of the union nut remote from the open end thereof. The outer surface of the periphery of the external flange is therefore tapered in an axial direction so that the outer surface is of truncated conical shape with the narrower end located nearer the circumferential ridge.

The lip has an inner surface that co-operates with the outer surface of the flange to provide for the union nut to be forced past the flange during assembly and to render it captive on the spigot after such assembly. The inwardly directed lip is tapered in diameter such that it is of basically saw tooth configuration in cross-section with the narrowest region or inner edge (15) thereof located nearer the external flange on the connector spigot in the installed condition. The interaction between the outer surface of the external flange and the inner surface of the inwardly directed lip is such that the lip is primarily deformed as the union nut is forced over the external flange during assembly and returns to its unstressed position behind the external flange.

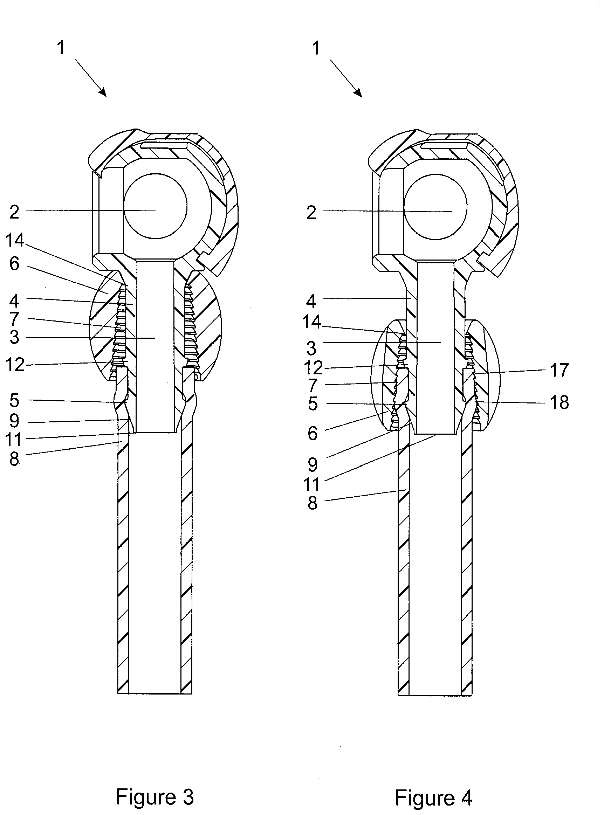

The external flange is also configured to form a stop (16) (see Figure 5) on the outer surface of the connector spigot to limit the extent to which a hose end (8) can be introduced onto the spigot (see Figures 3 and 4). In order to achieve this in an effective manner the outer diameter of the connector spigot is somewhat larger between the circumferential flange and socket than it is between the flange and the circumferential ridge itself. In effect a slight step change in outer diameter of the connector spigot is achieved across the flange. Thus, in use, when a hose is forced onto the connector spigot it will expand circumferential and pass over the ridge after which it retracts circumferentially onto the outer surface of the connector spigot between the ridge and circumferential flange. The free end of the hose will then abut the flange in order to arrest further movement of the hose onto the connector spigot.

The external flange is furthermore positioned at such a distance from the circumferential ridge that the outer surface of the hose end abutting the flange is located, as will be clear from Figure 4, such that the truncated conical thread on the inside of the nut will bite into the outer surface of the hose in two regions, namely the outside of the hose-end as indicated by numeral (17), as well as the bulging hose portion that passes over the circumferential ridge, as indicated by numeral (18) thereby forming two axially spaced seals.

It should also be noted that the invention is presently considered to be particularly appropriate to use in relation to garden hoses as well as flexible hydraulic and pneumatic hoses.

It will be understood that numerous other variations may be made to the embodiment of the invention described above, as long as they do not depart from the scope of the appended claims.

Throughout the specification and claims unless the contents requires otherwise the word 'comprise' or variations such as 'comprises' or 'comprising' will be understood to imply the inclusion of a stated integer or group of integers but not the exclusion of any other integer or group of integers.

## Claims

1. A tube termination unit for a tube that has a nominal internal diameter and is capable of limited circumferential expansion and wherein the tube termination unit includes a connector spigot (4) having a flow passage (3) forming an interior to the connector spigot (4), at least one circumferential ridge (5) on an outer cylindrical surface of the connector spigot (4) with an outer diameter of the circumferential ridge (5) being larger than the said nominal internal diameter of the tube, and a union nut (6) located on the connector spigot (4) wherein the union nut (6) has an internal screw thread (7) the diameter of which increases from an inner end of the union nut (6) to an open outer end thereof which is directed towards the circumferential ridge (5), the arrangement being such that the screw thread (7) is adapted to bite into the outer surface of the tube when the union nut (6) is screwed onto an outer surface of the tube end that covers the circumferential ridge (5) to clamp the tube into sealing engagement with the ridge (5) with the thread (7) of the union nut (6) engaging the outer surface of the tube, wherein the union nut (6) is held captive on the connector spigot (4) by virtue of an external flange (12) encircling the connector spigot (4) at an axial distance from the circumferential ridge (5) and wherein the outer periphery of the external flange (12) is configured to co-operate with an inwardly directed lip (14) on the union nut (6) to provide for the union nut (6) to be forced past the flange (12) during assembly and to render it captive on the connector spigot (4) after such assembly and wherein the external flange (12) is configured to form a stop (16) on an outer surface of the connector spigot (4) to limit the extent to which the tube can be introduced onto the connector spigot (4).

2. A tube termination unit as claimed in claim 1 in which the outer surface (13) of the periphery of the external flange (12) is tapered in an axial direction to follow a truncated conical shape with the narrower end located nearer the circumferential ridge (5).

3. A tube termination unit as claimed in either one of claims 1 or 2 in which the inwardly directed lip (14) on the union nut (6) is tapered in diameter such that a narrowest region thereof is located nearer the external flange (12) in the installed condition.

4. A tube termination unit as claimed in any one of the preceding claims in which the external flange (12) is positioned a distance from the circumferential ridge (5) such that the outer surface of a tube end abutting the external flange (12) is locatable such that the truncated conical thread (7) on the inside of the union nut (6) will bite into the outer surface of the tube in two regions, namely the outside of the tube-end itself and a bulging tube portion that passes over the circumferential ridge (5).

5. A tube termination unit as claimed in any one of the preceding claims in which the outer diameter of the connector spigot (4) is somewhat larger between the flange (12) and the end remote from the circumferential ridge (5) than it is between the flange (12) and the circumferential ridge (5) itself.

6. A tube termination unit as claimed in any one of the preceding claims in which the outer surface of the connector spigot (4) tapers gradually down from the periphery of the ridge (5) towards the free end of the connector spigot (4) to form a generally truncated conical surface (9) of small cone angle to assist in the circumferential expansion of the tube during introduction thereof onto the connector spigot (4).

7. A tube termination unit as claimed in any one of the preceding claims in which the connector spigot (4) and union nut (6) are of injection moulded plastics material.

## Patentansprüche

1. Rohrabschlusseinheit für ein Rohr, welches einen Nenninnendurchmesser hat und zu einer begrenzten Umfangsausdehnung fähig ist, und wobei die Rohrabschlusseinheit einen Anschlussstutzen (4) mit einem ein Inneres des Anschlussstutzens (4) bildenden Strömungskanal (3), mindestens eine Umfangsrippe (5) auf einer zylindrischen Außenfläche des Anschlussstutzens (4), mit einem Außendurchmesser der Umfangsrippe (5), der größer ist als der Nenninnendurchmesser des Rohrs, und eine Überwurfmutter (6), die auf dem Anschlussstutzen (4) angeordnet ist, umfasst, wobei die Überwurfmutter (6) ein Innengewinde (7) aufweist, dessen Durchmesser von einem inneren Ende der Überwurfmutter (6) zu einem offenen äußeren Ende derselben, welches auf die Umfangsrippe (5) gerichtet ist, zunimmt, wobei die Anordnung so ausgestaltet ist, dass das Schraubengewinde (7) dazu eingerichtet ist, sich in die äußere Oberfläche des Rohrs einzuschneiden, wenn die Überwurfmutter (6) auf Außenoberfläche des Rohrendes, welches die Umfangsrippe (5) überdeckt, geschraubt wird, um das Rohr in dichtendem Eingriff mit der Rippe (5) zu verklemmen, wobei das Gewinde (7) der Überwurfmutter (6) in die Außenoberfläche des Rohrs eingreift, wobei die Überwurfmutter (6) auf dem Anschlussstutzen (4) aufgrund eines Außenflansches (12), welcher den Anschlussstutzen (4) in einem axialen Abstand von der Umfangsrippe (5) umgibt, festgehalten wird, und wobei der Außenumfang des Außenflansches (12) konfiguriert ist, mit einer nach innen gerichteten Lippe (14) an der Überwurfmutter (6) zusammenzuwirken, um dafür zu sorgen, dass die Überwurfmutter (6) während des Zusammenbaus am Flansch (12) vorbeigezwungen wird, und nach einem solchen Zusammenbau an dem Anschlussstutzen (4) festgehalten bleibt, und wobei der Außenflansch (12) konfiguriert ist, einen Anschlag (16) an einer Außenfläche des Anschlussstutzens (4) zu bilden, um das Ausmaß, in dem das Rohr auf den Anschlussstutzen (4) eingeführt werden kann, zu begrenzen.

2. Rohrabschlusseinheit nach Anspruch 1, wobei die Außenfläche (13) des Umfangs des Außenflansches (12) in axialer Richtung verjüngt ist, um einer kegelstumpfförmigen Form zu folgen, wobei das engere Ende näher an der Umfangsrippe (5) angeordnet ist.

3. Rohrabschlusseinheit nach einem der Ansprüche 1 oder 2, wobei die nach innen gerichtete Lippe (14) an der Überwurfmutter (6) im Durchmesser so verjüngt ist, dass im eingebauten Zustand ein engster Bereich derselben näher am Außenflansch (12) angeordnet ist.

4. Rohrabschlusseinheit nach einem der vorherigen Ansprüche, wobei der Außenflansch (12) in einem solchen Abstand von der Umfangsrippe (5) angeordnet ist, dass die Außenfläche eines an den Außenflansch (12) angrenzenden Rohrendes so angeordnet werden kann, dass das kegelstumpfförmige Gewinde (7) auf der Innenseite der Überwurfmutter (6) in die Außenfläche des Rohres in zwei Bereichen eingreift, nämlich an der Außenseite des Rohrendes selbst und in einem gewölbten Rohrabschnitt, der über die Umfangsrippe (5) verläuft.

5. Rohrabschlusseinheit nach einem der vorherigen Ansprüche, wobei der Außendurchmesser des Anschlussstutzens (4) zwischen dem Flansch (12) und dem von der Umfangsrippe (5) entfernten Ende etwas größer ist als zwischen dem Flansch (12) und der Umfangsrippe (5) selbst.

6. Rohrabschlusseinheit nach einem der vorherigen Ansprüche, wobei sich die Außenfläche des Anschlussstutzens (4) vom Umfang der Rippe (5) zum freien Ende des Anschlussstutzens (4) hin allmählich verjüngt, um eine im Allgemeinen kegelstumpfförmige Oberfläche (9) mit kleinem Kegelwinkel zu bilden, um die Umfangsausdehnung des Rohrs während der Aufbringung desselben auf den Anschlussstutzen (4) zu unterstützen.

7. Rohrabschlusseinheit nach einem der vorherigen Ansprüche, wobei der Anschlussstutzen (4) und die Überwurfmutter (6) aus spritzgegossenem Kunststoffmaterial bestehen.

## Revendications

1. Unité de terminaison de tube pour un tube qui a un diamètre interne nominal et est capable d'une expansion circonférentielle limitée et dans laquelle l'unité de terminaison de tube comprend un embout de raccordement (4) ayant un passage d'écoulement (3) formant un intérieur à l'embout de raccordement (4), au moins une nervure circonférentielle (5) sur une surface cylindrique externe de l'embout de raccordement (4), un diamètre externe de la nervure circonférentielle (5) étant supérieur audit diamètre interne nominal du tube et un écrou-raccord (6) situé sur l'embout de raccordement (4) dans laquelle l'écrou-raccord (6) a un filetage intérieur (7) dont le diamètre augmente d'une extrémité intérieure de l'écrou-raccord (6) à une extrémité extérieure ouverte de celui-ci qui est dirigée vers la nervure circonférentielle (5), l'agencement est tel que le filetage de vis (7) est adapté pour adhérer dans la surface extérieure du tube lorsque l'écrou-raccord (6) est vissé sur une surface extérieure de l'extrémité du tube qui recouvre la nervure circonférentielle (5) pour serrer le tube en contact étanche avec la nervure (5) avec le filetage (7) de l'écrou-raccord (6) engageant la surface extérieure du tube, dans laquelle l'écrou-raccord (6) est retenu captif sur l'embout de raccordement (4) grâce à une bride externe (12) encerclant l'embout de raccordement (4) à une distance axiale de la nervure circonférentielle (5) et dans laquelle la périphérie externe de la bride externe (12) est configurée pour coopérer avec une lèvre dirigée vers l'intérieur (14) sur l'écrou-raccord (6) pour permettre à l'écrou-raccord (6) d'être forcé au-delà de la bride (12) pendant l'assemblage et de le rendre captif sur l'embout de raccordement (4) après un tel assemblage et dans laquelle la bride externe (12) est configurée pour former une butée (16) sur une surface externe de l'embout de raccordement (4) pour limiter la mesure dans laquelle le tube peut être introduit sur l'embout de raccordement (4).

2. Unité de terminaison de tube selon la revendication 1, dans laquelle la surface externe (13) de la périphérie de la bride externe (12) est effilée dans une direction axiale pour suivre une forme conique tronquée avec l'extrémité la plus étroite située plus près de la nervure circonférentielle (5).

3. Unité de terminaison de tube selon l'une ou l'autre des revendications 1 ou 2, dans laquelle la lèvre dirigée vers l'intérieur (14) sur l'écrou-raccord (6) a un diamètre conique de sorte qu'une région la plus étroite de celle-ci est située plus près de la bride externe (12) dans l'état installé.

4. Unité de terminaison de tube selon l'une quelconque des revendications précédentes, dans laquelle la bride externe (12) est positionnée à une distance de la nervure circonférentielle (5) de sorte que la surface externe d'une extrémité de tube venant en butée contre la bride externe (12) peut être localisée de sorte que le filetage conique tronqué (7) à l'intérieur de l'écrou-raccord (6) adhère à la surface extérieure du tube dans deux régions, à savoir l'extérieur de l'extrémité du tube lui-même et une partie de tube bombée qui passe sur la nervure circonférentielle (5).

5. Unité de terminaison de tube selon l'une quelconque des revendications précédentes, dans laquelle le diamètre extérieur de l'embout de raccordement (4) est un peu plus grand entre la bride (12) et l'extrémité éloignée de la nervure circonférentielle (5) qu'entre la bride (12) et la nervure circonférentielle (5) elle-même.

6. Unité de terminaison de tube selon l'une quelconque des revendications précédentes, dans laquelle la surface extérieure de l'embout de raccordement (4) s'effile progressivement vers le bas depuis la périphérie de la nervure (5) vers l'extrémité libre de l'embout de raccordement (4) pour former une surface conique généralement tronquée (9) de petit angle de cône pour aider à l'expansion circonférentielle du tube lors de son introduction sur l'embout de raccordement (4).

7. Unité de terminaison de tube selon l'une quelconque des revendications précédentes, dans laquelle l'embout de raccordement (4) et l'écrou-raccord (6) sont en matière plastique moulée par injection.
